# EUROPÄISCHE PATENTSCHRIFT

(11) **EP 2 493 154 B1**
(45) Veröffentlichungstag und Bekanntmachung des Hinweises auf die Patenterteilung: **21.08.2013**
(21) Anmeldenummer: 12156476.9
(22) Anmeldetag: 22.02.2012
(51) Int. Cl.: H04M 1/02

(54) **Station eines Kommunikationssystems mit Handhörer**
Station of a communication system with handset
Station d'un système de communication doté d'un combiné

(30) Priorität: 22.02.2011 DE 102011011970
(43) Veröffentlichungstag der Anmeldung: 29.08.2012
(73) Patentinhaber: ABB AG, 68309 Mannheim (DE)
(72) Erfinder: Sahlmann, Hans-Peter, 58454 Witten (DE); Heitz, Bernhard, 44229 Dortmund (DE); Ewers, Manfred, 58239 Schwerte (DE)

(56) Entgegenhaltungen:
- FR-A1- 2 715 789
- US-A- 3 546 397
- US-A- 4 581 490

## Beschreibung

Die Erfindung betrifft eine Station eines Kommunikationssystems mit einem Handhörer, welcher in seiner Ruheposition mittels einer Kante in einen Haken dieser Station eingehängt ist, wobei der Haken an seiner zur Frontseite der Station gerichteten Innenseite eine bogenförmige Kurvenkontur aufweist. Eine Anwendung ist z. B. bei einer Wohnungsstation eines Haus-Kommunikationssystems gegeben.

Eine solche Station eines Kommunikationssystems mit Handhörer ist aus der DE 32 07 824 A1 bekannt.

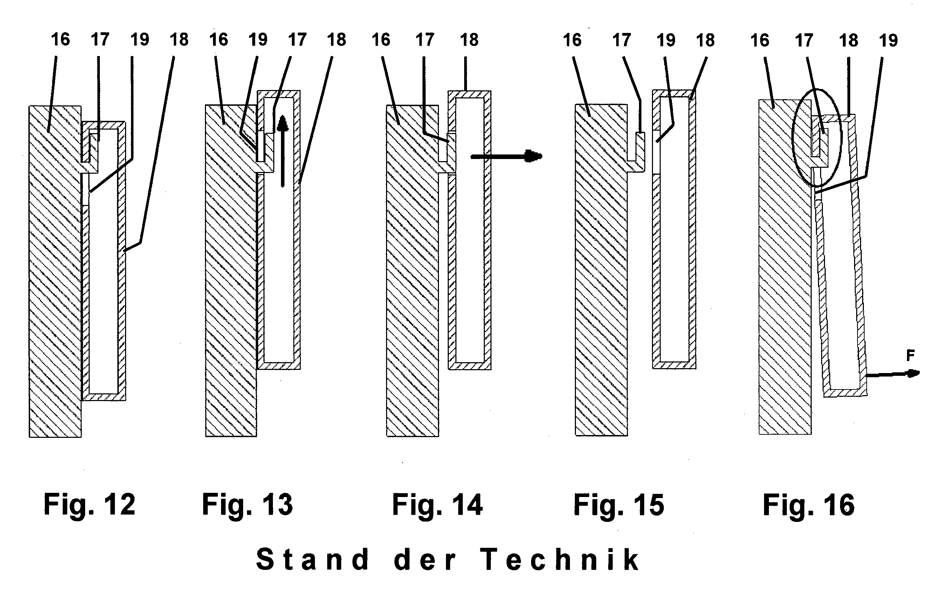

Wohnungsstationen eines Haus-Kommunikationssystems sind vielfach mit einem abnehmbaren Handhörer versehen. In den Fig. 12 - 16 sind Detailskizzen zur Einhängung zwischen Station bzw. Basisstation oder Wohnungsstation und Handhörer zur Erläuterung der sich beim Abheben sukzessive einstellenden unterschiedlichen Konfigurationen gemäß dem Stand der Technik dargestellt. Es sind eine Station 16 bzw. Basisstation oder Wohnungsstation sowie ein an dieser Station einhängbarer / von dieser Station 1 abhebbarer Handhörer 18 zu erkennen. Fig. 12 zeigt die Ruheposition, bei welcher ein Haken 17 der Station 16 in einen Hinterschnitt 19 des Handhörers 18 eingreift. Das Abheben des Handhörers 18 von der Station 16 erfolgt in der Regel in einer hauptsächlich rechtwinkligen Bewegungskurve, wobei der Handhörer 18 zunächst in Richtung Geräteoberkante der Station 16 bewegt werden muss - siehe den die Bewegungsrichtung angebenden Pfeil in Fig. 13. Sobald der Hinterschnitt 19 den Haken 17 freigibt, kann der Handhörer 18 senkrecht von der Station 16 weggezogen werden - siehe den die Bewegungsrichtung angebenden Pfeil in Fig. 14. Fig. 15 zeigt die Position mit vollständig von der Station 16 entferntem Handhörer.

Diese allgemein bekannte Konstruktion weist den Nachteil auf, dass ein Verhaken des Handhörers an der Station 16 nicht auszuschließen ist, d. h., dass ein Benutzer entweder den Haken 17 beschädigen kann, z. B. abreißt, oder dass ein Benutzer den Hinterschnitt 19 beschädigen kann, z. B. herausreißt, wenn er versucht, den unteren Abschnitt des Handhörers weg von der Station 16 zu bewegen. Der eingekreiste Abschnitt gibt den Bereich der überhöhten Bauteilbelastung mit nachfolgendem Verklemmen der Bauteile und Zerstörungsgefahr an.

Aus der DE 32 07 824 A1 ist ein Fernsprecher für Tisch- und Wandbetrieb mit einem stationären Gehäuseteil und einem Handapparat mit Hörmuschel, Griffteil und Sprechteil bekannt, wobei der stationäre Gehäuseteil an seiner Gehäuseaußenfiläche mit einer Mulde zur Aufnahme des abgelegten Handapparates versehen ist. Der Handapparat ist an einer Seitenfläche seiner Hörmuschel mit einer Ausnehmung versehen, in die ein nasenförmiger Vorsprung eines Profilabschnittes des stationären Gehäuseteils beim Auflegen des Handapparates einfügbar ist. Die Ausbildung des Profilabschnittes mit der an der Gehäuseaußenfläche vortretenden Nase als elastischer Ausläufer eines Füllkörpers kann bei vertikaler Betriebslage eine Erleichterung für das Abheben des Handapparates insofern bewirken, als selbst bei ungeschicktem Zugriff beim Abheben des Handapparates die Gefahr eines Verkantens des nasenförmigen Vorsprungs des Füllkörpers und der seitlichen Ausnehmung in der Hörmuschel, die sich gegenseitig hinterschneiden, durch die Möglichkeit des elastischen Ausweichens des nasenförmigen Vorsprungs in Richtung des Gehäuseinnenraums vermieden ist.

Der Erfindung liegt die Aufgabe zugrunde, eine Station eines Kommunikationssystems mit Handhörer mit optimierter Einhängung des Handhörers an der Station anzugeben.

Diese Aufgabe wird erfindungsgemäß gelöst durch eine Station eines Kommunikationssystems mit einem Handhörer, welcher in seiner Ruheposition mittels einer Kante in einen Haken dieser Station eingehängt ist, wobei der Haken an seiner zur Frontseite der Station gerichteten Innenseite eine bogenförmige Kurvenkontur aufweist, wobei eine abgerundete Außenkante des Handhörers während des Abhebens 1 Abhebelns des Handhörers an einer Gleitfläche an der Frontseite der Station abrollt und wobei die Kante des Handhörers mittels eines Hinterschnittes gebildet und der als Aufhängung dienende Hinterschnitt zusätzlich als Lautsprecheröffinung für einen im Handhörer eingebauten Lautsprecher genutzt ist.

Die mit der Erfindung erzielbaren Vorteile liegen insbesondere darin, dass Beschädigungen sowohl der Station als auch des Handhörers wirksam verhindert werden, da der Benutzer den Handhörer nicht gemäß einer rechtwinkligen Bewegungskurve von der Station abheben muss, sondern gemäß einer sich quasi automatisch ergebenden bogenförmigen Kurvenkontur. Damit wirkt es sich nicht negativ aus, wenn der Benutzer im unteren Abschnitt oder auch im oberen Abschnitt des Handhörers eine Zugkraft aufbringt, die senkrecht zur Frontseite des Basisgeräts wirkt. Der Handhörer kann vielmehr ohne jedes Verhaken von der Station abgenommen werden, indem er nach Ausübung einer Zugkraft selbsttätig über den Haken der Station heraus gleitet.

Die Kante des Handhörers mittels eines Hinterschnittes zu bilden führt zum Einen zu einer gefälligen Formgebung des Handhörers unter Vermeidung vom Gehäuse abstehender Komponenten und zum Anderen zur Vereinfachung der Fertigung. Zusätzlich hat der Hinterschnitt eine Audiofunktion.

Vorteilhaft ist dabei die Auflagefläche der Kante des Handhörers der bogenförmigen Kurvenkontur des Hakens angepasst, wodurch ein reibungsarmes Gleiten erleichtert wird.

Zweckmäßig weisen sowohl der Haken der Station als auch die Kante des Handhörers eine Endabrundung auf, wodurch einem Verhaken entgegengewirkt wird.

Für ein seitlich präzise geführtes Einhängen des Handhörers an der Station ist es von Vorteil, dass der Haken Seitenabrundungen aufweist, wodurch sich auch bei seitlich versetztem Einhängen quasi automatisch die richtige seitliche Position des Handhörers in Bezug zur Station einstellt. Eine seitliche Arretierung des Handhörers in Bezug zur Basisstation im unteren Abschnitt wird erzielt, indem eine Auswölbung des Handhörers in eine hierzu korrespondierende Vertiefung an der Basisstation eingreift.

Die Erfindung wird nachstehend an Hand der in der Zeichnung dargestellten Ausführungsbeispiele erläutert. Es zeigen:
- Fig. 1: eine Seitenansicht einer Station mit eingehängtem, jedoch im unteren Abschnitt von der Station entferntem Handhörer,
- Fig. 2-6: Detailskizzen zur Einhängung zwischen Station und Handhörer zur Erläuterung der sich beim Abheben sukzessive einstellenden unterschiedlichen Positionen,
- Fig. 7: eine Seitenansicht einer Station bei entferntem Handhörer,
- Fig. 8: eine Sicht auf die obere Stirnfläche einer Station bei entferntem Handhörer,
- Fig. 9: eine perspektivische Sicht auf eine Station bei abgehobenem (entferntem) Handhörer,
- Fig. 10: eine perspektivische Sicht auf einen Handhörer,
- Fig. 11: eine Seitenansicht (Querschnitt) einer Station mit eingehängtem Handhörer,
- Fig. 12 - 16: Detailskizzen zur Einhängung zwischen Station und Handhörer zur Erläuterung der sich beim Abheben sukzessive einstellenden unterschiedlichen Konfigurationen gemäß dem Stand der Technik.

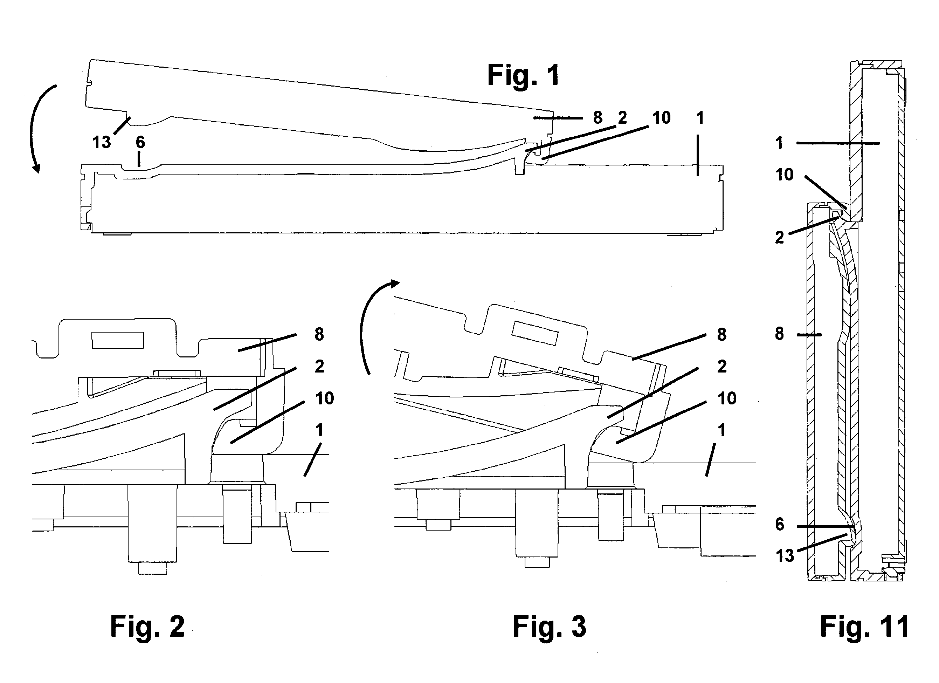

In Fig. 1 ist eine Seitenansicht einer Basisstation / Wohnungsstation bzw. Station mit eingehängtem, jedoch im unteren Abschnitt von der Station entferntem Handhörer dargestellt. Es ist eine Basisstation bzw. Station 1, z. B. eine Wohnungsstation eines Haus-Kommunikationssystems, zu erkennen, welche einen Haken 2 zum Einhängen eines Handhörers 8, aufweist, wozu sich eine im Querschnitt L-förmige Kante 10 am Rande eines Hinterschnitts im Handhörer 8 auf dem Haken 2 der Station 1 abstützt. Für die seitliche Arretierung des Handhörers 8 gegenüber der Station 1 kann eine Auswölbung (Auskragung) 13 des Handhörers 8 in eine korrespondierend hierzu angeordnete und ausgebildete Vertiefung 6 an der Frontseite der Station 1 eingreifen, siehe hierzu auch den skizzierten Pfeil, welcher die Bewegungsrichtung des Handhörers 8 zur Station 1 hin zeigt.

In Fig. 11 ist eine Seitenansicht (Querschnitt) einer Station mit eingehängtem Handhörer gezeigt, bei welcher zusätzlich zur Abbildung gemäß Fig. 1 die Auswölbung (Auskragung) 13 des Handhörers 8 vollständig in die korrespondierend hierzu angeordnete und ausgebildete Vertiefung 6 an der Frontseite der Station 1 eingreift, so dass ein bündiges und seitlich arretiertes Anliegen des Handhörers 8 an der Station 1 sichergestellt ist.

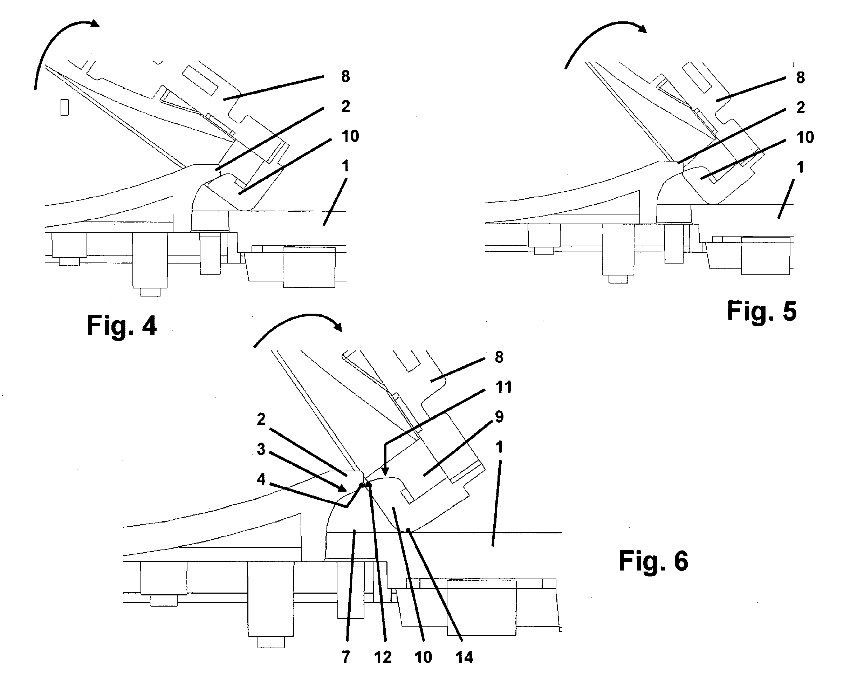

In den Fig. 2 - 6 sind Detailskizzen zur Einhängung zwischen Station und Handhörer zur Erläuterung der sich beim Abheben / Abhebeln sukzessive einstellenden unterschiedlichen Positionen dargestellt. Zunächst wird hierzu auf die ausführliche Skizze gemäß Fig. 6 hingewiesen, in welcher die wesentlichen Bauteile der Anordnung bezeichnet sind. Fig. 6 zeigt
- einen interessierenden Abschnitt der Station 1 mit dem Haken 2, wobei die Station 1 auf ihrer Frontseite im Bereich des Hakens 2 mit einer Gleitfläche 7 versehen ist,
- einen interessierenden Abschnitt des Handhörers 8 der Kante 10 am Rande eines Hinterschnitts 9.

Von Wichtigkeit ist in diesem Zusammenhang,
- dass der Haken 2 in seinem zur Fronseite der Station weisenden Bereich eine bogenförmige Kurvenkontur 3 aufweist, welche während des Abhebens / Abhebelns ein reibungsarmes Gleiten einer endseitigen Auflagefläche 11 der Kante 10 ermöglicht,
- dass sowohl die Hakenkontur 3 des Hakens 2 mit einer Haken-Endabrundung 4 als auch die Auflagefläche 11 der Kante 10 mit einer Kanten-Endabrundung 12 versehen sind,
- dass die Ecke der Kante 10 in Form einer abgerundeten Außenkante 14 (Gehäuseoberkante) ausgebildet ist.

Nachfolgend werden die sich während des Abhebens / Abhebelns des Handhörers 8 von der Station 1 ergebenden Positionen skizziert:
- Fig. 2 zeigt die Ruheposition mit eingehängtem Handhörer, bei welcher sich die Kante 10 des Handhörers 10 am Haken 2 der Station 1 abstützt.
- Bei der Position gemäß Fig. 3 (Beginn der Bewegung) wird der Handhörer leicht angekippt, d. h. der untere Abschnitt des Handhörers wird vom Benutzer weg von der Station 1 gezogen / bewegt, so dass zum Einen die Auflagefläche 11 der Kante 10 des Handhörers 8 entlang der bogenförmigen Kurvenkontur 3 des Hakens 2 gleitet und zum Anderen gleichzeitig die abgerundete Außenkante 14 (Gehäuseoberkante) des Handhörers 8 an der Gleitfläche 7 an der Frontseite der Station 1 abrollt.
- Bei der Position gemäß Fig. 4 ist das Abheben / Abhebeln des Handhörers bereits so weit fortgeschritten, dass die Auflagefläche 11 nur noch zum Teil längs der bogenförmige Kurvenkontur 3 des Hakens 2 gleitet, während die Anordnung Gleitfläche 7 / abgerundete Außenkante 14 gleichzeitig weiterhin einen reibungsarmen Drehpunkt für die Bewegung des Handhörers 8 gegenüber der Station 1 bildet.
- Bei der Position gemäß Fig. 5 haben sich die die Haken-Endabrundung 4 / Kanten-Endabrundung 12 bereits sehr angenähert, so dass bei weiteren Drehung des Handhörers 8 um einen geringen Winkel kein Ineinandergreifen der Auflagefläche 11 der Kante 10 und der bogenförmigen Kurvenkontur 3 des Hakens 2 mehr gegeben ist, so dass der Handhörer 8 vom Benutzer vollständig von der Station 1 abgenommen werden kann.
- Bei der Position gemäß Fig. 6 befindet sich die Kante 10 nicht mehr hinter dem Haken 2 und der Benutzer kann den Handhörer 8 von der Station 1 abnehmen.

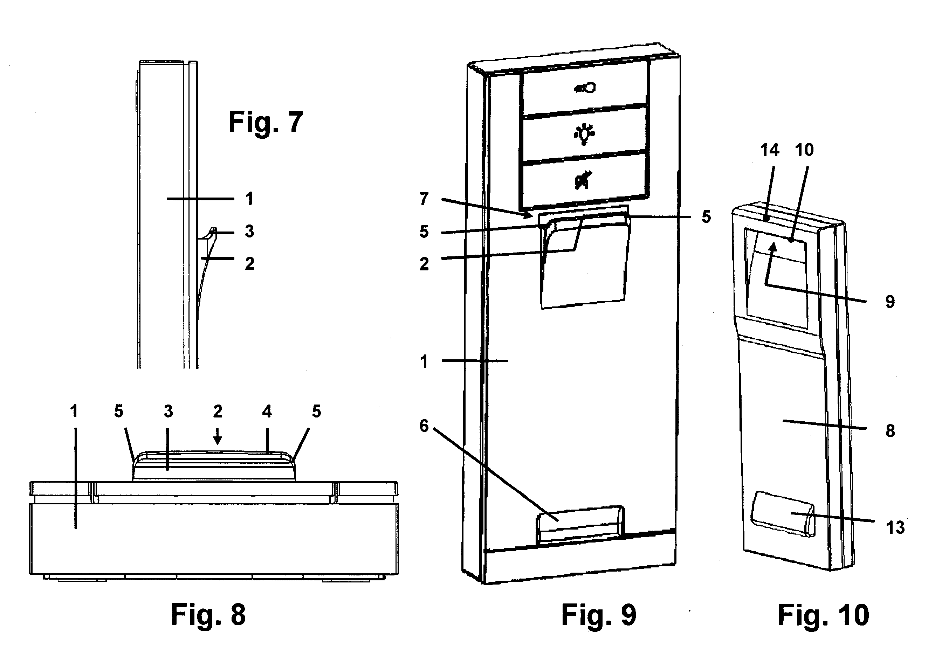

In Fig. 7 ist eine Seitenansicht einer Station 1 bei entferntem Handhörer dargestellt (Seitenansicht der Hakenkontur). Es ist insbesondere die Ausbildung des Hakens 2 mit seiner bogenförmigen Kurvenkontur 3 zu erkennen.

In Fig. 8 ist eine Sicht auf die obere Stirnfläche einer Station bei entferntem Handhörer dargestellt. Dabei ist skizziert, dass der Haken 2 der Station 1 an seinen beiden Seiten jeweils mit einer Haken-Seitenabrundung 5 versehen ist, was für ein zentriertes Aufsetzen des Handhörers 8 auf den Haken 2 und damit auf die Station 1 förderlich ist. Diese zusätzliche seitliche kurvenförmige Kontur des Hakens 2 in Form der Haken-Seitenabrundungen 5 unterbindet jedes seitliche Verkanten des Handhörers. Des Weiteren sind die bogenförmige Kurvenkontur 3 und die Haken-Endabrundung 4 des Hakens 2 skizziert.

In Fig. 9 ist eine perspektivische Sicht auf eine Station bei entferntem Handhörer dargestellt. Von Interesse sind dabei zum Einen der Haken 2 mit seinen beiden Haken-Seitenabrundungen 5 und die im Bereich des Hakens 2 auf der Frontseite der Station 1 befindliche Gleitfläche 7 und zum Anderen die im unteren Abschnitt der Frontseite der Station 1 befindliche Vertiefung 6, in welche bei eingehängtem Handhörer 8 die Auswölbung 13 des Handhörers 8 eingreift / eintaucht. Hierdurch wird eine gerade (lotrechte) Einhängung des Handhörers sichergestellt.

In Fig. 10 ist eine perspektivische Sicht auf einen Handhörer 8 dargestellt. Es sind
- der Hinterschnitt 9 des Handhörers 8 mit der Kante 10 am Rande dieses Hinterschnittes 9,
- die oberhalb des Hinterschnittes 9 befindliche abgerundete Außenkante 14 (Gehäuseoberkante),
- die für die Zentrierung / seitliche Fixierung dienende, im unteren Abschnitt
   des Handhörers 8 angeordnete Auswölbung 13 (hervorspringende Kontur) zu erkennen. Vorteilhaft kann der für die Aufhängung dienende Hinterschnitt 9 zusätzlich als Lautsprecheröffnung für einen im Handhörer eingebauten Lautsprecher genutzt werden.

### Bezugszeichenliste

- 1: Station, Basisstation oder Wohnungsstation
- 2: Haken
- 3: bogenförmige Kurvenkontur des Hakens 2
- 4: Haken-Endabrundung
- 5: Haken-Seitenabrundung
- 6: Vertiefung an der Station 1
- 7: Gleitfläche an der Frontseite der Station 1
- 8: Handhörer
- 9: Hinterschnitt des Handhörers 8
- 10: hakenförmige Kante am Rande des Hinterschnitts 9
- 11: Auflagefläche der Kante 10
- 12: Kanten-Endabrundung
- 13: Auswölbung am Handhörer
- 14: abgerundete Außenkante (Gehäuseoberkante)
- 15: -
- 16: Station, Basisstation oder Wohnungsstation (Stand der Technik)
- 17: Haken
- 18: Handhörer (Stand der Technik)
- 19: Hinterschnitt

## Patentansprüche

1. Station eines Kommunikationssystems mit einem Handhörer (8), welcher in seiner Ruheposition mittels einer Kante (10) in einen Haken (2) dieser Station (1) eingehängt ist, wobei der Haken (2) an seiner zur Frontseite der Station gerichteten Innenseite eine bogenförmige Kurvenkontur (3) aufweist und eine abgerundete Außenkante (14) des Handhörers (8) während des Abhebens / Abhebelns des Handhörers (8) an einer Gleitfläche (7) an der Frontseite der Station (1) abrollt, **dadurch gekennzeichnet, dass** die Kante (10) des Handhörers (8) mittels eines Hinterschnittes (9) gebildet und dieser als Aufhängung dienende Hinterschnitt (9) zusätzlich als Lautsprecheröffnung für einen im Handhörer (8) eingebauten Lautsprecher genutzt ist.

2. Station nach Anspruch 1, **dadurch gekennzeichnet, dass** die Auflagefläche (11) der Kante (10) des Handhörers (8) der bogenförmigen Kurvenkontur (3) des Hakens (2) der Station (1) angepasst ist.

3. Station nach Anspruch 1, **dadurch gekennzeichnet, dass** der Haken (2) der Station (11) eine Endabrundung (4) aufweist.

4. Station nach Anspruch 1, **dadurch gekennzeichnet, dass** der Haken (2) der Station (1) Seitenabrundungen (5) aufweist.

5. Station nach Anspruch 1, **dadurch gekennzeichnet, dass** die Kante (10) des Handhörers (8) eine Endabrundung (12) aufweist.

6. Station nach Anspruch 1, **dadurch gekennzeichnet, dass** eine seitliche Arretierung des Handhörers (8) in Bezug zur Basisstation (1) erzielt wird, indem eine Auswölbung (13) des Handhörers in eine hierzu korrespondierende Vertiefung (6) an der Basisstation (1) eingreift.

## Claims

1. Station in a communication system having a hand-held receiver (8) which, in its position of rest, is suspended by one edge (10) in a hook (2) on said station (1), wherein the hook (2) has, on its inner side directed towards the front of the station, an arcuate curve contour (3), and a rounded outer edge (14) of the hand-held receiver (8) rolls off a sliding surface (7) on the front of the station (1) as the hand-held receiver (8) is lifted/levered off, **characterized in that** the edge (10) of the hand-held receiver (8) is formed by means of an undercut (9), and this undercut (9) used as a suspension bracket is additionally used as a loudspeaker opening for a loudspeaker incorporated in the hand-held receiver (8).

2. Station according to Claim 1, **characterized in that** the contact surface (11) of the edge (10) of the hand-held receiver (8) matches the arcuate curve contour (3) of the hook (2) on the station (1).

3. Station according to Claim 1, **characterized in that** the hook (2) on the station (11) has an end rounded portion (4).

4. Station according to Claim 1, **characterized in that** the hook (2) on the station (1) has side rounded portions (5).

5. Station according to Claim 1, **characterized in that** the edge (10) of the hand-held receiver (8) has an end rounded portion (12).

6. Station according to Claim 1, **characterized in that** lateral locking of the hand-held receiver (8) relative to the base station (1) is achieved by virtue of a boss (13) on the hand-held receiver engaging in a depression (6) which corresponds thereto on the base station (1).

## Revendications

1. Station d'un système de communication doté d'un combiné (8) qui est accroché dans sa position de repos par un bord (10) dans un crochet (2) de ladite station (1), le crochet (2) présentant, sur son côté intérieur orienté vers le côté avant de la station, un contour courbe en forme d'arc (3) et un bord extérieur arrondi (14) du combiné (8) roulant pendant l'enlèvement / le pivotement du combiné (8) contre une surface de glissement (7) sur le côté avant de la station (1), **caractérisée en ce que** le bord (10) du combiné (8) est formé au moyen d'une contre-dépouille (9) et cette contredépouille (9) servant d'accrochage est en outre utilisée en tant qu'ouverture de haut-parleur pour un haut-parleur incorporé dans le combiné (8).

2. Station selon la revendication 1, **caractérisée en ce que** la surface d'appui (11) du bord (10) du combiné (8) est adaptée au contour courbe en forme d'arc (3) du crochet (2) de la station (1).

3. Station selon la revendication 1, **caractérisée en ce que** le crochet (2) de la station (11) présente un arrondi d'extrémité (4).

4. Station selon la revendication 1, **caractérisée en ce que** le crochet (2) de la station (1) présente des arrondis latéraux (5).

5. Station selon la revendication 1, **caractérisée en ce que** le bord (10) du combiné (8) présente un arrondi d'extrémité (12).

6. Station selon la revendication 1, **caractérisée en ce qu'**un blocage latéral du combiné (8) par rapport à la station de base (1) est obtenu par le fait qu'une partie bombée (13) du combiné vient en prise dans un renfoncement (6) correspondant à celle-ci sur la station de base (1).
